# EUROPEAN PATENT APPLICATION

(11) **EP 3 932 202 A2**
(43) Date of publication of application: **05.01.2022**
(21) Application number: 21183424.7
(22) Date of filing: 02.07.2021
(51) Int. Cl.: A01N 25/10, A01N 25/34, A01N 59/16, A01P 1/00, A01N 65/22, A01N 65/08

(54) **ANTIMICROBIAL MATERIAL, ESPECIALLY PACKAGING MATERIAL, METHOD OF OBTAINING THE ANTIMICROBIAL MATERIAL AND APPLICATION THEREOF**

(30) Priority: 03.07.2020 PL 43456320
(71) Applicant: Uniwersytet Ekonomiczny W Poznaniu, 61-875 Poznan (PL)
(72) Inventor: Ligaj, Marta, 62-090 Kiekrz (PL); Wojciechowska, Patrycja, 62-002 Zlotkowo (PL)
(74) Representative: AOMB Polska Sp. z.o.o.

(57) **Abstract**

The invention relates to an antimicrobial material, especially packaging material, a method of obtaining thereof and use thereof. This material can be used as active packaging to provide longer durability and shelf life of food.

## Description

The invention relates to an antimicrobial material, especially a packaging material, a method of obtaining thereof and application thereof. This material can be used as an active packaging to provide longer durability and food shelf life.

Active packaging protects packaged food product against growth of undesirable microflora, thus also contributing to consumer safety. Chitosan-based packaging materials are known, which exhibit antimicrobial activity, such as chitosan-based films, developed by A. Riaz et al. [2018], containing polyphenols extracted from apple peels as an active agent. Another solution proposed by F. Bi et al. [2019] relates to materials based on chitosan and proanthocyanidins. Siripatrawan and Kaewklin [2018] developed films based on chitosan and nanometric titanium oxide, exhibiting antimicrobial activity and oxygen absorber characteristics. Other biopolymers used in manufacturing of packaging include polylactide (PLA) and poly(vinyl alcohol) (PVOH). PLA-based antimicrobial films with silver and chitosan added are known which exhibit antimicrobial activity against *Staphylococcus aureus* and *Escherichia coli* [M. Turalija et al. 2016]. Feng et al. [2019] developed PLA- and titanium dioxide-based packaging materials which exhibited antimicrobial activity against *Staphylococcus aureus* and *Escherichia coli.* Galya et al. [2008] used silver nanoparticles to produce PVOH-based films which inhibited growth of S. *aureus* and *E. coli.* D. Hu and L. Wang [2016] developed PVOH- and modified cellulose-based films with antimicrobial activity against S. *aureus* and *E. coli.*

The aim of the invention was to develop antimicrobial materials based on biopolymers, in particular chitosan, polylactide, poly(vinyl alcohol), containing active iron particles, which exhibit selective antimicrobial activity, i.e. inhibit growth of undesirable microflora, and do not inhibit growth of desirable microorganisms, present, among others, in food products (e.g. dairy products).

A method of obtaining an antimicrobial material, especially packaging material, according to the invention comprises following steps:
a) Preparation of an antimicrobial preparation based on iron and a plant extract through aqueous extraction of dried plant, addition of FE(II) and/or FE(III) iron salts and precipitation of a precipitate constituting the antimicrobial preparation based on iron and the plant extract
b) Preparation of a solution of biopolymer, preferably selected from chitosan, polylactide and poly(vinyl alcohol)
c) Introduction of the preparation obtained in step a) into the biopolymer solution obtained in step b) in an amount of 1-10% (w/w), preferably 2-5% (w/w), relative to the biopolymer solution
d) Optional sonication of the mixture obtained in step c) in an ultrasonic bath for 1 to 5 minutes
e) Application of the mixture onto a paper or plastic surface and drying, or
f) Pouring the mixture into a mould and evaporation of the solvent

Preferably, in step a) the dried plant is mixed with water or an aqueous solution, the ratio by weight of dried plant:water being between 1:5 and 1:30, preferably between 1:10 and 1: 20, after which the mixture is shaken at a temperature of between 20 °C and 100 °C, preferably between 40 °C and 100 °C, more preferably between 60 °C and 90 °C for at least 10 min., preferably for at least 30 min., most preferably for at least 1 h, to obtain an aqueous extract of the dried plant, the obtained aqueous extract of dried plant is then separated from the solid residue of the dried plant and a solution of FE(II) or FE(III) iron salts or a mixture of FE(II) and FE(III) iron salts in a concentration of 0,01 to 2 M, preferably 0,05 to 1 M, is added to the aqueous extract of dried plant with stirring, the volume ratio of salt solution:aqueous extract of dried plant is between 1:1 and 1:10, preferably between 1:2 and 1:5, pH is then adjusted to between 5.0 and 6.5 until precipitation of the precipitate containing the active iron particles is achieved, after which the obtained suspension of active iron particles is stabilised by addition of 0.001-5% (w/v), preferably 0.005-0.5% (w/v) α-lipoic acid relative to a volume of the suspension.

Preferably, in step a) the suspension, once stabilised, is dried to obtain a precipitate containing active iron particles. The suspension, once stabilised, may be dried by lyophilisation.

The dried plant may contain oregano leaves and/or yerba mate, and/or olive leaves. Preferably, the dried plant contains oregano leaves and yerba mate, and olive leaves in a weight ratio of 2:2:1, respectively.

The dried plant may be mixed with water in a dried plant:water ratio of 1:16 by weight. The mixture of dried plant and water may be shaken for 1,5 h at 80°C.

Preferably, 0,033 mole of FeCl₃·6H₂O and/or FeCl₂·4H₂O per dm³ of extract may be added to the aqueous extract of dried plant.

A 0.01% (w/v) addition of α-lipoic acid relative to the volume of the suspension may be used to stabilise the suspension.

Preferably, in step b), chitosan with an average molar mass of 100000-300000 g/mol and a degree of deacetylation ≥ 75% is used as the biopolymer. In step b), chitosan can be dissolved in an acid solution of 0.1-0.3M at 20-40°C, wherein a chitosan:acid ratio may be 0.1 to 5 grams of chitosan per 100 ml of acid solution. Preferably, the acid selected from acetic, lactic, maleic, hydrochloric and succinic acid is used in step b). Most preferably, in step b), 0,2 M acetic acid is used, the chitosan:acid ratio being 1 gram of chitosan per 100 ml of acid solution.

In step b), poly(vinyl alcohol) with an average molar mass of 30000-70000 and a degree of hydrolysis of 87-90% can be used as the biopolymer. Preferably, in step b) poly(vinyl alcohol) is mixed with water, preferably in a weight ratio of 1 g of poly(vinyl alcohol) per 10 ml of water. The mixture is then heated, while stirring, until a solution is obtained.

Alternatively, in step b), polylactide (PLA) is used as the biopolymer, preferably with a density of 1.24 g/cm³. Polylactide (PLA) can be mixed with chloroform, preferably in a weight ratio of 1 g of PLA per 10 ml of chloroform, and the mixture is mixed to obtain a solution.

Preferably, in step c), the preparation obtained in step a) is introduced into the biopolymer solution obtained in step b) in an amount of 3% (w/w) relative to the biopolymer solution. In step c), a plasticiser, e.g. polyhydric alcohol plasticiser, may be added to the biopolymer solution. The plasticiser is preferably glycerine (GL) which is added in an amount of 0.001-20% by weight.

Preferably, glycerine is added to the resulting solution as the plasticiser in an amount of GL:PLA = 0.2-1:10 (w/w), preferably 0.5:10 (w/w).

An antimicrobial material, especially packaging material, according to the invention is obtained by a method for obtaining antimicrobial material, especially packaging material, according to the invention. The material may be in a form of a film coated on at least a part of at least one side with a mixture containing a biopolymer and an antimicrobial preparation based on iron and a plant extract. Alternatively, the material may be in the form of a paper coated on at least a part of at least one side with a mixture containing a biopolymer and an antimicrobial preparation based on iron and a plant extract. Optionally, the material is in the form of a film containing a biopolymer and an antimicrobial preparation based on iron and a plant extract.

The antimicrobial material, especially packaging material, according to the invention is used for packaging food products.

The antimicrobial material, especially packaging material, according to the invention is used in the plastics industry, packaging industry and food industry to produce active biodegradable packaging. An advantage of using the antimicrobial material according to the invention in the packaging industry, compared to the solutions known in literature in this field, is that the obtained material is biodegradable, shows antimicrobial activity, is non-toxic, and has desired functional properties. The material according to the invention can be used as a packaging material due to its suitable mechanical strength, elasticity, as well as barrier properties towards gases. Physico-chemical parameters of the material can be modified by use of plasticisers such as polyhydric alcohols, preferably glycerine.

The developed antimicrobial material is in accordance with current trends in packaging market related to adaptation of packaging materials to a concept of the European strategy for plastics in a closed loop economy, concerning introduction of restrictions on sale of single-use products made of plastics (e.g. disposable packaging) in European market, including materials made of non-recyclable plastics.

The object of the invention is presented in non-limiting embodiments.

Embodiment 1. Production of a paper-based antimicrobial packaging material coated with chitosan with an addition of a preparation of active iron particles, obtained using yerba mate leaves (FeYM), and evaluation of its antimicrobial activity.

Plant extract was prepared by suspending 25 g of dried yerba mate in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl_{2·}4H₂O:yerba mate extract), continuously stirring the contents of the reaction beakers on a magnetic stirrer (at 600 rpm). 0.75 M NaOH was added to the obtained solution to raise pH to between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation (FeYM).

300 ml of 0.2M acetic acid solution and 3 g of chitosan with an average molar mass of 100000-300000, a degree of deacetylation ≥ 75% were introduced into a glass vessel and the mixture was heated with stirring at 40°C on a magnetic stirrer until a solution was obtained, and then the preparation of active iron particles based on yerba mate leaves (FeYM) in an amount of 3% (w/w) relative to the chitosan was introduced. The obtained solution was successively sonicated on an ultrasonic bath for 5 min and then applied onto a surface of a paper product (parchment) using a spiral applicator and dried at 20°C for 24 h and at 30°C for 24 h. Parchment may be replaced with plastic film by applying the solution onto the surface of the film. Alternatively, the solution can be poured into a mould and the solvent can be evaporated, thus obtaining a homogeneous film of antimicrobial material.

In order to evaluate antimicrobial activity of the obtained material, the following procedure was applied. The packaging material (parchment coated with FeYM-modified chitosan) was immersed in 70% ethanol and then transferred to sterile plates and allowed to evaporate the ethanol. Microbial cultures were separately prepared on a nutrient agar (bacteria) and Sabouraud medium (fungi: yeasts and moulds). Subsequently, 100 µl of a microbial suspension at a density of 1.5x10⁷ cells per 1 ml (bacteria) and 1x10⁶ (fungi) was seeded onto the solidified medium, and then the packaging material was applied onto the seeded medium. Plates prepared in this way were incubated at 37°C (+/-2°C) for 24 h in case of bacteria or at room temperature for 72 h in case of yeast and 120 h in case of mould culture. Results of the antimicrobial activity test for the packaging material containing the active iron preparation obtained from yerba mate leaves (FeYM) are shown in Table 1.

**Table 1. Results of the antimicrobial activity test for chitosan-based packaging materials containing the preparation of active iron particles obtained from yerba mate leaves (FeYM)**

| | Parchment | Parchment/chitosan | Parchment/chitosan + 3%FeYM |
|---|---|---|---|
| *Geotrichum candidum* | visible growth | reduction in growth | inhibition of growth |
| *Rhodotorula rubra* | visible growth | reduction in growth | inhibition of growth |
| *Staphylococcus epidermidis* | visible growth | reduction in growth | inhibition of growth |
| *Escherichia coli* | visible growth | reduction in growth | inhibition of growth |
| *Bacillus subtilis* | visible growth | reduction in growth | inhibition of growth |

In all cases, inhibition of microbial growth was observed on plates covered with the packaging material (parchment/chitosan + 3%FeYM).

Embodiment 2 Production of a paper-based antimicrobial packaging material coated with chitosan with addition of a preparation of active iron particles, obtained using oregano leaves (FeOL), and evaluation of its antimicrobial activity.

Plant extract was prepared by suspending 25 g of dried oregano leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:oregano extract), while continuously stirring the contents of the reaction beakers on a magnetic stirrer (at 600 rpm). 0.75 M NaOH was added to the obtained solution to raise pH to between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation (FeOL).

300 ml of 0.2M acetic acid solution and 3 g of chitosan with an average molar mass of 100000-300000, a degree of deacetylation ≥ 75% were introduced into a glass vessel and the mixture was heated with stirring at 40°C on a magnetic stirrer until a solution was obtained, and then a preparation of active iron particles based on oregano leaves (FeOL) in an amount of 3% (w/w) relative to the chitosan was introduced. The obtained solution was successively sonicated on an ultrasonic bath for 5 min and then applied onto a surface of a paper product (parchment) using a spiral applicator and dried at 20°C for 24 h and at 30°C for 24 h.

In order to evaluate antimicrobial activity of the obtained material, the following procedure was followed. The packaging material (parchment coated with FeOL-modified chitosan) was immersed in 70% ethanol and then transferred to sterile plates and allowed to evaporate the ethanol. Microbial cultures were separately prepared on a nutrient agar (bacteria) and Sabouraud medium (fungi: yeasts and moulds). Subsequently, 100 µl of a microbial suspension at a density of 1.5x10⁷ cells per 1 ml (bacteria) and 1x10⁶ (fungi) was seeded onto the solidified medium, and then the packaging material was applied onto the seeded medium. Plates prepared in this way were incubated at 37°C (+/-2°C) for 24 h in case of bacteria or at room temperature for 72 h in case of yeast and 120 h in case of mould culture. Results of the antimicrobial activity test for the packaging material containing the active iron preparation obtained from oregano leaves (FeOL) are shown in Table 2.

**Table 2. Results of the antimicrobial activity test for chitosan-based packaging material containing the preparation of active iron particles obtained from oregano leaves (FeOL)**

| | Parchment | Parchment/ chitosan | Parchment/ chitosan + 3%FeOL |
|---|---|---|---|
| *Geotrichum candidum* | visible growth | reduction in growth | inhibition of growth |
| *Rhodotorula rubra* | visible growth | reduction in growth | inhibition of growth |
| *Staphylococcus epidermidis* | visible growth | reduction in growth | inhibition of growth |
| *Escherichia coli* | visible growth | reduction in growth | inhibition of growth |
| *Bacillus subtilis* | visible growth | reduction in growth | inhibition of growth |

In all cases, inhibition of microbial growth was observed on plates covered with the packaging material (parchment/chitosan + 3%FeOL).

Embodiment 3. Production of a paper-based antimicrobial packaging material coated with polylactide with addition of a preparation of active iron particles, obtained using yerba mate leaves (FeYM), and evaluation of its antimicrobial activity.

Plant extract was prepared by suspending 25 g of dried yerba mate in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:yerba mate extract), while continuously stirring the contents of the reaction beakers on a magnetic stirrer (at 600 rpm). 0.75 M NaOH was added to the obtained solution to raise pH to between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation (FeYM).

200 ml of chloroform and 20 g of polylactide (PLA) with a density of 1.24 g/cm³ were introduced into a glass vessel, the mixture was heated with stirring at room temperature on a magnetic stirrer until a solution was obtained, glycerin (GL) was added as a plasticiser in an amount of GL/PLA (w/w) = 0.2-1/10, preferably 0.5/10, and then a preparation of active iron particles based on yerba mate leaves (FeYM) was introduced in an amount of 3% (w/w) relative to the polylactide. The obtained solution was successively sonicated on an ultrasonic bath for 5 min and then applied onto a surface of a paper product (parchment) using a spiral applicator and dried at 20°C for 24 h and at 30°C for 24 h.

In order to evaluate antimicrobial activity of the obtained material, the following procedure was followed. The packaging material (parchment coated with FeYM-modified polylactide) was immersed in 70% ethanol and then transferred to sterile plates and allowed to evaporate the ethanol. Microbial cultures were separately prepared on a nutrient agar (bacteria) and Sabouraud medium (fungi: yeasts and moulds). Subsequently, 100 µl of a microbial suspension at a density of 1.5x10⁷ cells per 1 ml (bacteria) and 1x10⁶ (fungi) was seeded onto the solidified medium, and then the packaging material was applied onto the seeded medium. Plates prepared in this way were incubated at 37°C (+/-2°C) for 24 h in case of bacteria or at room temperature for 72 h in case of yeast and 120 h in case of mould culture. Results of the antimicrobial activity test for the packaging material based on paper, coated with polylactide, containing the active iron preparation obtained from yerba mate leaves (FeYM) are shown in Table 3.

**Table 3. Results of the antimicrobial activity test for packaging materials based on paper, coated with polylactide, containing the preparation of active iron particles obtained from yerba mate leaves (FeYM)**

| | Parchment | Parchment/polylactide | Parchment/polylactide + 3%FeYM |
|---|---|---|---|
| *Geotrichum candidum* | visible growth | reduction in growth | inhibition of growth |
| *Rhodotorula rubra* | visible growth | reduction in growth | inhibition of growth |
| *Staphylococcus epidermidis* | visible growth | reduction in growth | inhibition of growth |
| *Escherichia coli* | visible growth | reduction in growth | inhibition of growth |
| *Bacillus subtilis* | visible growth | reduction in growth | inhibition of growth |

In all cases, inhibition of microbial growth was observed on plates covered with the packaging material (parchment/polylactide + 3%FeYM).

Embodiment 4. Production of a paper-based antimicrobial packaging material coated with poly(vinyl alcohol) with addition of a preparation of active iron particles, obtained using oregano leaves (FeOL), and evaluation of its antimicrobial activity.

Plant extract was prepared by suspending 25 g of dried oregano leaves in 400 ml of deionised water and shaking at 400 rpm for 1.5 h at 80°C. The extract obtained was then filtered under pressure on a Buchner funnel using a soft filter paper. In a separate vessel, a fresh solution of 0.1 M FeCl₂·4H₂O was prepared, which was added to the extract in a volume ratio of 1:3 (0.1 M FeCl₂·4H₂O:oregano extract), continuously stirring the contents of the reaction beakers on a magnetic stirrer (at 600 rpm). 0.75 M NaOH was added to the obtained solution to raise the pH to between 5.0 and 6.5 (the pH was measured with an indicator paper) until a precipitate was obtained. Then, 0.01% (w/v) of α-lipoic acid was added to the suspension. The obtained suspension of active iron particles was lyophilised to obtain a dry preparation (FeOL).

200 ml of deionized water and 20 g of poly(vinyl alcohol) with an average molar mass of 30000-70000, a degree of hydrolysis 87-90% were introduced into a glass vessel and the mixture was heated with stirring at 80°C on a magnetic stirrer until a solution was obtained, and then a preparation of active iron particles based on oregano leaves (FeOL) in an amount of 3% (w/w) relative to the poly(vinyl alcohol) was introduced. The obtained solution was successively sonicated on an ultrasonic bath for 5 min and then applied onto a surface of a paper product (parchment) using a spiral applicator and dried at 20°C for 24 h and at 30°C for 24 h.

In order to evaluate antimicrobial activity of the obtained material, the following procedure was followed. The packaging material (parchment coated with FeOL-modified poly(vinyl alcohol)) was immersed in 70% ethanol and then transferred to sterile plates and allowed to evaporate the ethanol. Microbial cultures were separately prepared on a nutrient agar (bacteria) and Sabouraud medium (fungi: yeasts and moulds). Subsequently, 100 µl of a microbial suspension at a density of 1.5x10⁷ cells per 1 ml (bacteria) and 1x10⁶ (fungi) was seeded onto the solidified medium, and then the packaging material was applied onto the seeded medium. Plates prepared in this way were incubated at 37°C (+/-2°C) for 24 h in case of bacteria or at room temperature for 72 h in case of yeast and 120 h in case of mould culture. Results of the antimicrobial activity test for the packaging material based on paper, coated with poly(vinyl alcohol), containing the active iron preparation obtained from oregano leaves (FeOL) are shown in Table 4.

**Table 4. The results of the antimicrobial activity test for the packaging material based on paper, coated with poly(vinyl alcohol), containing the preparation of active iron particles obtained from oregano leaves (FeOL).**

| | Parchment | Parchment/poly (vinyl alcohol) | Parchment/poly (vinyl alcohol) + 3%FeOL |
|---|---|---|---|
| *Geotrichum candidum* | visible growth | reduction in growth | inhibition of growth |
| *Rhodotorula rubra* | visible growth | reduction in growth | inhibition of growth |
| *Staphylococcus epidermidis* | visible growth | reduction in growth | inhibition of growth |
| *Escherichia coli* | visible growth | reduction in growth | inhibition of growth |
| *Bacillus subtilis* | visible growth | reduction in growth | inhibition of growth |

In all cases, inhibition of microbial growth was observed on plates covered with the packaging material (parchment/poly(vinyl alcohol) + 3%FeOL).

### Literature

1. A. Riaz, S. Lei, H. M. S. Akhtar, P. Wan, D. Chen, S. Jabbar, M. Abid, M. M. Hashim, X. Zeng, Preparation and characterization of chitosan-based antimicrobial active food packaging film incorporated with apple peel polyphenols, International Journal of Biological Macromolecules, Vol. 114, 2018, 547-555.
2. Bi F., Zhang X., Bai R., Liu Y., Liu J., Liu J., Preparation and characterization of antioxidant and antimicrobial packaging films based on chitosan and proanthocyanidins, International Journal of Biological Macromolecules, 2019, 134, 11-19.
3. U. Siripatrawan, P. Kaewklin, Fabrication and characterization of chitosan-titanium dioxide nanocomposite film as ethylene scavenging and antimicrobial active food packaging, Food Hydrocolloids, Vol. 84, 2018, 125-134.
4. M. Turalija, S. Bischof, A. Budimir, S. Gaanc, Antimicrobial PLA films from environment friendly additives, Composites, 2016, Part B, Engineering 102, DOI: 10.1016/j.compositesb.2016.07.017.
5. T. Galya, V. Sedlarik, I. Kuritka, R. Novotny, J. Sedlarikova, P. Saha, Antibacterial Poly(vinyl Alcohol) Film Containing Silver Nanoparticles: Preparation and Characterization, Journal of Applied Polymer Science , 2008, 110(5), 3178-3185.
6. D. Hu, L. Wang, Preparation and characterization of antibacterial films based on polyvinyl alcohol/quaternized cellulose, Reactive and Functional Polymers, 2016, Vol. 101, 90-98.

## Claims

1. A method of obtaining an antimicrobial material, especially packaging material, comprising following steps:
a) Preparation of an antimicrobial preparation based on iron and a plant extract through aqueous extraction of dried plant, addition of FE(II) and/or FE(III) iron salts and precipitation of a precipitate constituting the antimicrobial preparation based on iron and the plant extract
b) Preparation of a solution of biopolymer, preferably selected from chitosan, polylactide and poly(vinyl alcohol)
c) Introduction of the preparation obtained in step a) into the biopolymer solution obtained in step b) in an amount of 1-10% (w/w), preferably 2-5% (w/w), relative to the biopolymer solution
d) Optional sonication of the mixture obtained in step c) in an ultrasonic bath for 1 to 5 minutes
e) Application of the mixture onto a paper or plastic surface and drying, or
f) Pouring the mixture into a mould and evaporation of the solvent

2. The method according to claim 1, **characterised in that** in step a) the dried plant, preferably containing oregano leaves and/or yerba mate and/or olive leaves, is mixed with water or an aqueous solution, the ratio by weight of dried plant:water being between 1:5 and 1:30, preferably between 1:10 and 1:20, after which the mixture is shaken at a temperature between 20°C and 100°C, preferably between 40 °C and 100°C, more preferably between 60°C and 90°C for at least 10 min., preferably for at least 30 min., most preferably for at least 1 h, to obtain an aqueous extract of the dried plant, the obtained aqueous extract of dried plant is then separated from the solid residue of the dried plant and a solution of FE(II) or FE(III) iron salts or a mixture of FE(II) and FE(III) iron salts in a concentration of 0,01 to 2 M, preferably 0,05 to 1 M, is added to the aqueous extract of dried plant with stirring, wherein the volume ratio of salt solution : aqueous extract of dried plant is between 1:1 and 1:10, preferably between 1:2 and 1:5, pH is then adjusted to between 5.0 and 6.5 until precipitation of the precipitate containing the active iron particles is achieved, after which the obtained suspension of active iron particles is stabilised by addition of 0.001-5% (w/v), preferably 0.005-0.5% (w/v) α-lipoic acid relative to a volume of the suspension, wherein preferably the suspension after stabilisation is dried, preferably by lyophilization, thereby obtaining a precipitate containing active iron particles.

3. The method according to claim 2, **characterised in that** the dried plant contains oregano leaves and yerba mate, and olive leaves in a weight ratio of 2:2:1, respectively.

4. The method according to claim 2 or 3, **characterised in that** the dried plant is mixed with water in a dried plant:water ratio of 1:16 by weight, wherein preferably the mixture of dried plant and water is shaken for 1,5 h at 80°C.

5. The method according to any of claims 2 to 4, **characterised in that** 0,033 mole of FeCl₃·6H₂O and/or FeCl₂·4H₂O per dm³ of extract is added to the aqueous extract of dried plant.

6. The method according to any of claims 2 to 5, **characterised in that** a 0.01% (w/v) addition of α-lipoic acid relative to the volume of the suspension is used to stabilise the suspension.

7. The method according to any of claims 1 to 6, **characterised in that** in step b), chitosan with an average molar mass of 100000-300000 g/mol and a degree of deacetylation ≥ 75% is used as the biopolymer, wherein preferably in step b) chitosan is dissolved in an acid solution of 0.1-0.3M at 20-40°C, wherein a chitosan:acid ratio is 0.1 to 5 grams of chitosan per 100 ml of acid solution.

8. The method according to claim 7, **characterised in that** in step b) the acid selected from acetic, lactic, maleic, hydrochloric and succinic acid is used, wherein preferably in step b) 0,2 M acetic acid is used, the chitosan:acid ratio being 1 gram of chitosan per 100 ml of acid solution.

9. The method according to any of claims 1 to 6, **characterised in that** in step b) poly(vinyl alcohol) with an average molar mass of 30000-70000 and a degree of hydrolysis of 87-90% is used as the biopolymer, wherein preferably in step b) poly(vinyl alcohol) is mixed with water, preferably in a weight ratio of 1 g of poly(vinyl alcohol) per 10 ml of water, and the mixture is then heated, while stirring, until a solution is obtained.

10. The method according to any of claims 1 to 6, **characterised in that** in step b), polylactide (PLA) is used as the biopolymer, preferably with a density of 1.24 g/cm³, wherein preferably in step b) polylactide (PLA) is mixed with chloroform, preferably in a weight ratio of 1 g of PLA per 10 ml of chloroform, to obtain a solution.

11. The method according to any of claims 1 to 10, **characterised in that** in step c) the preparation obtained in step a) is introduced into the biopolymer solution obtained in step b) in an amount of 3% (w/w) relative to the biopolymer solution.

12. The method according to any of claims 1 to 11, **characterised in that** in step b), a plasticiser is added to the biopolymer solution, which is preferably polyhydric alcohol plasticiser, preferably glycerine (GL), which is added in an amount of 0.001-20% by weight.

13. The method according to claim 12, **characterised in that** glycerine is added to the resulting solution as the plasticiser in an amount of GL:PLA (w/w) = 0.2-1:10, preferably 0.5:10.

14. An antimicrobial material, especially packaging material, obtained by the method as defined in any of claims 1 to 13, preferably in a form of a film or paper coated on at least a part of at least one side with a mixture containing a biopolymer and an antimicrobial preparation based on iron and a plant extract, or in a form of a film containing a biopolymer and an antimicrobial preparation based on iron and a plant extract.

15. Use of a material as defined in claim 14 for packaging food products.
